# EUROPÄISCHE PATENTSCHRIFT

(11) **EP 1 307 372 B1**
(45) Veröffentlichungstag und Bekanntmachung des Hinweises auf die Patenterteilung: **31.03.2004**
(21) Anmeldenummer: 01964864.1
(22) Anmeldetag: 26.07.2001
(51) Int. Cl.: B60T 13/68, B60T 8/36

(54) **ELEKTROMAGNETISCH BETÄTIGTES VENTIL, INSBESONDERE FÜR HYDRAULISCHE BREMSANLAGEN VON KRAFTFAHRZEUGEN**
ELECTROMAGNETICALLY ACTUATED VALVE, ESPECIALLY FOR HYDRAULIC BRAKING SYSTEMS OF MOTOR VEHICLES
SOUPAPE A ACTIONNEMENT ELECTROMAGNETIQUE, EN PARTICULIER POUR SYSTEMES DE FREINAGE HYDRAULIQUES DE VEHICULES AUTOMOBILES

(30) Priorität: 27.07.2000 DE 10036576
(43) Veröffentlichungstag der Anmeldung: 07.05.2003
(73) Patentinhaber: ROBERT BOSCH GMBH, 70442 Stuttgart (DE)
(72) Erfinder: SCHMITT, Holger, 73728 Esslingen (DE); AMBROSI, Massimo, 71672 Marbach (DE)
(86) Internationale Anmeldenummer: PCT/DE2001/002823
(87) Internationale Veröffentlichungsnummer: WO 2002/009993

(56) Entgegenhaltungen:
- EP-A- 0 864 477
- WO-A-01/30626
- DE-A- 4 105 362
- DE-A- 4 426 796
- US-A- 5 704 395

## Beschreibung

### Stand der Technik

Die Erfindung geht aus von einem elektromagnetisch betätigten Ventil nach der Gattung des Patentanspruchs 1.

Es ist schon ein solches Ventil bekannt (DE 44 45 221 A1), bei dem der Stößel außenseitig mit drei längs laufenden Abflachungen zur Flüssigkeitsführung in den Ventildom versehen ist, um eine hydraulische Kraftwirkung am Anker des Ventils zu erzeugen. Da der Stößel ventilkammerseitig mit geringem radialen Spiel in der Längsbohrung des Ventilkörpers geführt ist, gegen den Ventildom hin aber das Radialspiel stark vergrößert und zugleich der Querschnitt der mit den Abflachungen erzeugten Kanäle des Stößels erheblich vermindert ist, vereinigen sich die Flüssigkeitsteilströme der drei Kanäle im Verlauf der Längsbohrung des Ventilkörpers. Im Ventildom vorhandene Luft ist daher nur schwierig zu entfernen. Luft im Ventil erhöht aber dessen Arbeitsgeräusch.

Ein Ventil gemäß dem Oberbegriff des Anspruchs 1 geht z.B aus WO-A-0 130 626 hervor.

### Vorteile der Erfindung

Das erfindungsgemäße Ventil mit den Merkmalen des Patentanspruchs 1 hat demgegenüber den Vorteil, dass Flüssigkeit aus der Ventilkammer mit relativ geringem Strömungswiderstand durch wenigstens einen Kanal in den Ventildom dringen und dort vorhandene Luft verdrängen kann, welche durch einen anderen Kanal zur Ventilkammer gelangen und dort aus dem Ventil abgeleitet werden kann. Da mehrere getrennte Kanäle als Strömungswege zur Verfügung stehen, die erst im Ventildom miteinander kommunizieren, ist die Entlüftung sehr wirksam.

Durch die in den Unteransprüchen aufgeführte Maßnahmen sind vorteilhafte Weiterbildungen und Verbesserungen des im Patentanspruch 1 beschriebenen Ventils gegeben.

In den Ansprüchen 2 und 3 sind zweckmäßige Maßnahmen für die Gestaltung des Stößels angegeben.

Die im Anspruch 4 offenbarte Weiterbildung der Erfindung begünstigt die Entlüftung des Ventildoms durch am Anker ausgebildete Strömungswege.

Die im Anspruch 5 angegebene Maßnahme stellt bei der spielarmen Führung des Stößels im Ventilkörper sicher, dass das Schließglied auch bei ungünstigen Toleranzverhältnissen sicher in den Ventilsitz des Sitzventils findet.

### Zeichnung

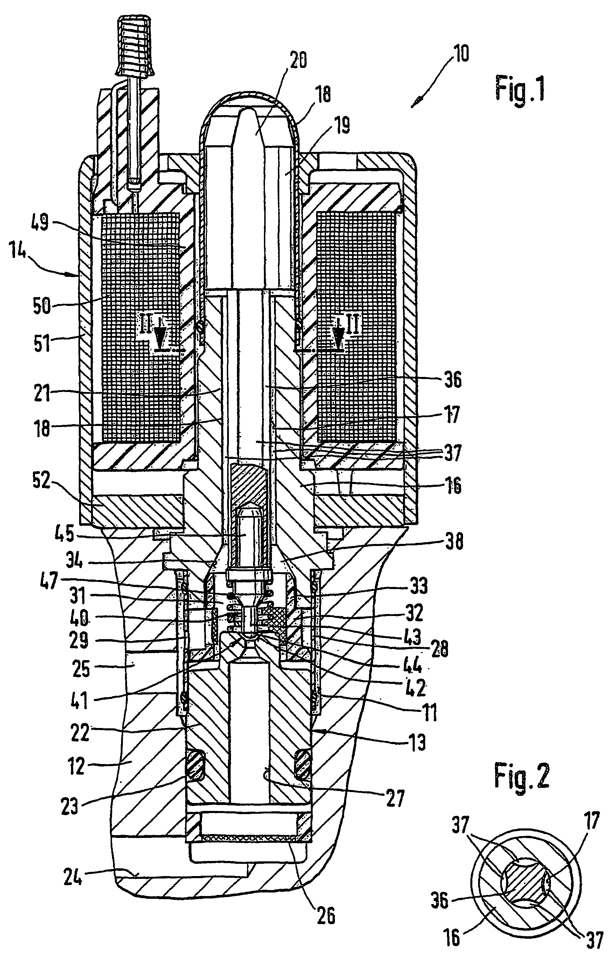

Ein Ausführungsbeispiel der Erfindung ist in der Zeichnung vereinfacht dargestellt und in der nachfolgenden Beschreibung näher erläutert. Es zeigen Figur 1 einen Längsschnitt durch ein elektromagnetisch betätigtes Ventil und Figur 2 einen Querschnitt entlang der Linie II-II in Figur 1 durch einen Ventilkörper und einen Stößel des Ventils.

### Beschreibung des Ausführungsbeispiels

Ein in Figur 1 der Zeichnung dargestelltes, elektromagnetisch betätigtes Ventil 10 für hydraulische Bremsanlagen von Kraftfahrzeugen besteht im Wesentlichen aus zwei Baugruppen: einem in einer Stufenbohrung 11 eines Ventilblocks 12 befestigten hydraulischen Teil 13 und einem auf den hydraulischen Teil aufgesteckten elektrischen Teil 14.

Der hydraulische Teil 13 weist einen Ventilkörper 16 mit einer durchgehenden Längsbohrung 17 auf. Seitens des elektrischen Teils 14 ist am Ventilkörper 16 ein Ventildom 18 befestigt. In dem Ventildom 18 ist ein Anker 19 mit längs verlaufenden Nuten 20 längs bewegbar aufgenommen.

In der Stufenbohrung 11 des Ventilblocks 12 ist ein Ventilsitzteil 22 mit einem umfangseitig angeordneten Dichtring 23 aufgenommen. Dieser trennt eine Zuströmbohrung 24 des Ventilblocks 12 von einer Abströmbohrung 25. Seitens der Zuströmbohrung 24 ist in der Stufenbohrung 11 eine Filterscheibe 26 angeordnet. Der mit einer Längsbohrung 27 versehene Ventilsitzteil 22 ist mittels einer Hülse 28 mit dem Ventilkörper 16 verbunden. Die Hülse 28 besitzt mantelseitig eine Bohrung 29.

Die Hülse 28 umschließt eine sich zwischen dem Ventilkörper 16 und dem Ventilsitzteil 22 erstreckende Ventilkammer 31. In dieser ist eine Filterhülse 32 aufgenommen, welche in einen durchmessergrößeren Bohrungsabschnitt 33 der Längsbohrung 17 des Ventilkörpers 16 eingreift. An diesen Bohrungsabschnitt 33 schließt sich ein hohlkegelförmiger Übergang 34 zum durchmesserkleineren Teil der Längsbohrung 17 an.

In der Längsbohrung 17 des Ventilkörpers 16 ist ein stiftförmiger Stößel 36 aufgenommen. Dieser erstreckt sich vom Anker 19 bis in die Ventilkammer 31. Der Stößel 36 ist über die gesamte Länge des durchmesserkleineren Teils der Längsbohrung 17 mit geringem radialen Spiel längs bewegbar geführt. Der Stößel 36 hat mantelseitig vier voneinander getrennte Kanäle 37, die sich entlang dem Stößel 36, ausgehend von der Ventilkammer 31, bis zu dem Ventildom 18 erstrecken (Figuren 1 und 2). Die Kanäle 37 sind in gleichmäßiger Teilung am Stößel 36 angeordnet und in ihrem Querschnitt konkav ausgerundet. Da der Stößel 36 in die Ventilkammer 31 hineinragt, steht diese aufgrund des hohlkegelförmigen Übergangs 34 mit einer im Querschnitt keilförmigen Verengung 38 zu dem Stößel 36 in strömungsgünstiger Weise mit dessen Kanälen 37 in Verbindung.

In der ventildomabgewandten Ventilkammer 31 befindet sich ein Schließglied 40 eines Sitzventils 41. Dieses hat einen am Ventilsitzteil 22 ausgebildeten, hohlkegelförmigen Ventilsitz 42, der mit der Längsbohrung 27 des Ventilsitzteils 22 in flüssigkeitsleitender Verbindung steht. Gegen das Ventilsitzteil 22 weist das Schließglied 40 einen durchmesserkleinen, zylindrischen Abschnitt 43 auf, der scharfkantig in ein dem Ventilsitz 42 zugeordnetes Kugelsegment 44 übergeht. Das Schließglied 40 ist ventilsitzabgewandt mit einem Zapfen 45 versehen, mit dem es, gleichachsig zum Stößel 36 verlaufend, mit großem radialen Spiel in diesen eingreift.

In der Ventilkammer 31 ist außerdem eine Rückstellfeder 47 in Form einer Schraubendruckfeder aufgenommen, welche einerseits am Ventilsitzteil 22 und andererseits am Schließglied 40 mit Vorspannung angreift. Unter der Wirkung der Rückstellfeder 47 sind das Schließglied 40, der Stößel 36 und der Anker 19 kraftschlüssig aneinander abgestützt. Wie in Figur 1 dargestellt, nimmt das Sitzventil 41 seine Offenstellung ein, in welcher das Schließglied 40 über den Stößel 36 den Anker 19 im Anschlag am Ventildom 18 hält.

Der elektrische Teil 14 des Ventils 10 umschließt im Wesentlichen den aus dem Ventilblock 12 aufragenden Ventilkörper 16 mit Ventildom 18 und Anker 19. Der elektrische Teil 14 besteht aus einer Spule 49 mit einer elektrischen Wicklung 50, welche von einem magnetflussleitenden Gehäuse 51 mit Jochringscheibe 52 umschlossen ist. In Verbindung mit dem elektrischen Teil 14 ist der Ventilkörper 16 zugleich Polkern des Ventils 10.

Das Ventil 10 ist durch Bestromen seiner elektrischen Wicklung 50 und damit Erzeugen einer Magnetkraftwirkung auf den Anker 19 betätigbar. Die Magnetkraft bewirkt eine Bewegung des Ankers 19 gegen den Ventilkörper 16. Die Ankerbewegung wird über den Stößel 36 auf das Schließglied 40 übertragen. Hierdurch ist das Sitzventil 41 aus der gezeichneten Offenstellung in die Schließstellung schaltbar, in welcher das Kugelsegment 44 am Ventilsitz 42 angreift, oder durch Stromsteuerung in beliebige Zwischenstellungen überführbar. Bei geöffnetem Sitzventil 43 ist die Zuströmbohrung 24 des Ventilblocks 12 mit der Abströmbohrung 25 verbunden. Flüssigkeit kann von der Zuströmbohrung 24 durch die Längsbohrung 27 des Ventilsitzteils 22, den Ventilsitz 42, die Ventilkammer 31, die Filterhülse 32, die Bohrung 29 der Hülse 28 zu der Abströmbohrung 25 fließen. Mit der flüssigkeitsgefüllten Ventilkammer 31 steht der Ventildom 18 durch die Kanäle 37 des Stößels 36 in flüssigkeitsleitender Verbindung.

Bei der Erstbefüllung der Bremsanlage kann sich Luft im Ventildom 18 befinden. Die Luft wird in folgender Weise aus dem Ventildom 18 verdrängt: Bei aus der Schließstellung heraus sich öffnendem Sitzventil 41 gelangen aus dem Ventilsitz 42 austretende Flüssigkeitsstrahlen in die dem Ventilsitz 42 gegenüberliegende Verengung 38 der Ventilkammer 31 und von dort durch wenigstens einen Kanal 37 und wenigstens eine Nut 20 des Ankers 19 in den Ventildom 22. Dort verdrängt die Flüssigkeit die vorhandene Luft und reißt diese durch einen anderen Kanal 37 mit sich in die Ventilkammer 31, von der das Flüssigkeits-Luft-Gemisch durch die Abströmbohrung 25 aus dem Ventil 10 abgeleitet wird.

## Patentansprüche

1. Elektromagnetisch betätigtes Ventil (10), insbesondere für hydraulische Bremsanlagen von Kraftfahrzeugen mit einem Ventilkörper (16), einem mit dem Ventilkörper (16) verbundenen Ventildom (18), einem längs bewegbar im Ventildom (18) aufgenommenen Anker (19), einer Längsbohrung (17) im Ventilkörper (16) und einem in der Längsbohrung (17) längs bewegbar geführten Stößel (36) zum Übertragen einer Ankerbewegung auf ein Schließglied (40) eines Sitzventils (41) in einer ventildomabgewandten Ventilkammer (31), der aus einem Ventilsitz (42) des Sitzventils (41) strömende Flüssigkeit zuführbar und durch wenigstens einen Kanal (37) des Stößels (36) in den Ventildom (18) leitbar ist, wobei der Stößel (36) mantelseitig wenigstens zwei, voneinander getrennte Kanäle (37) hat, die sich entlang dem Stößel (36) ausgehend von der Ventilkammer (31) bis zu dem Ventildom (18) erstrecken,
**dadurch gekennzeichnet, dass**
a) der Stößel (36) über die gesamte Länge der Längsbohrung (17) des Ventilkörpers (16) mit geringem radialen Spiel geführt ist und
b) dass die Ventilkammer (31) an ihrer dem Ventilsitz (42) gegenüberliegenden Seite mit einer im Querschnitt keilförmigen Verengung (38) zu dem Stößel (36) in dessen Kanäle (37) übergeht.

2. Ventil nach Anspruch 1, **dadurch gekennzeichnet, dass** die Kanäle (37) in gleichmäßiger Teilung am Stößel (36) angeordnet sind.

3. Ventil nach Anspruch 2, **dadurch gekennzeichnet, dass** die Kanäle (37) in ihrem Querschnitt konkav ausgerundet sind.

4. Ventil nach Anspruch 1, **dadurch gekennzeichnet, dass** der Anker (19) mit längslaufenden Nuten (20) versehen ist.

5. Ventil nach Anspruch 1, **dadurch gekennzeichnet, dass** das Schließglied (40) mit einem gleichachsig zum Stößel (36) verlaufenden Zapfen (45) mit großem radialen Spiel im Stößel (36) aufgenommen ist.

## Claims

1. Electromagnetically actuated valve (10), in particular for hydraulic brake systems of motor vehicles, with a valve body (16), with a valve dome (18) connected to the valve body (16), with an armature (19) received longitudinally movably in the valve dome (18), with a longitudinal bore (17) in the valve body (16) and with a tappet (36), guided longitudinally movably in the longitudinal bore (17), for transmitting an armature movement to a closing member (40) of a seat valve (41) in a valve chamber (31) which faces away from the valve dome and to which fluid flowing out of a valve seat (42) of the seat valve (41) can be supplied and can be led through at least one duct (37) of the tappet (36) into the valve dome (18), the tappet (36) having on the outer surface area at least two ducts (37) which are separate from one another and which, starting from the valve chamber (31), extend along the tappet (36) as far as the valve dome (18), **characterized in that**
a) the tappet (36) is guided with slight radial play over the entire length of the longitudinal bore (17) of the valve body (16), and
b) the valve chamber (31), on its side located opposite the valve seat (42), merges with a narrowing (38) of wedge-shaped cross section towards the tappet (36) into the ducts (37) of the latter.

2. Valve according to Claim 1, **characterized in that** the ducts (37) are arranged at a uniform spacing on the tappet (36).

3. Valve according to Claim 2, **characterized in that** the ducts (37) are concavely rounded in cross section.

4. Valve according to Claim 1, **characterized in that** the armature (19) is provided with grooves (20) running longitudinally.

5. Valve according to Claim 1, **characterized in that** the closing member (40) is received, with a pin (45) running coaxially to the tappet (36), in the said tappet with pronounced radial play.

## Revendications

1. Soupape à actionnement électromagnétique (10), en particulier pour systèmes de freinage hydrauliques de véhicules automobiles, avec un corps de soupape (16), un dôme de soupape (18) relié au corps de soupape (16), un induit (19) mobile dans le sens de la longueur logé dans le dôme de soupape (18), un alésage longitudinal (17) dans le corps de soupape (16) et un poussoir (36) mobile sur un axe longitudinal dans l'alésage longitudinal (17) permettant de transférer un mouvement induit sur un corps de fermeture (40) d'une soupape à siège (41) dans une chambre de soupape (31) tournée vers le dôme de soupape vers laquelle du liquide s'écoulant depuis un siège de soupape (42) de la soupape à siège (41) peut être amené et conduit dans le dôme de soupape (18) par au moins un canal (37) du poussoir (36), le poussoir (36) présentant du côté de son enveloppe au moins deux canaux (37) séparés l'un de l'autre et se prolongeant le long du poussoir (36), de la chambre de soupape (31) au dôme de soupape (18), **caractérisée en ce que**
a) le poussoir (36) est guidé sur toute la longueur de l'alésage longitudinal (17) du corps de soupape (16) avec un jeu radial faible et
b) la chambre de soupape (31) passe, avec un rétrécissement cunéiforme (38) dans une section transversale en direction du poussoir (36), dans les canaux (37) du poussoir (36) sur sa face opposée au siège de soupape (42).

2. Soupape selon la revendication 1,
**caractérisée en ce que**
les canaux (37) sont répartis de manière égale sur le poussoir (36).

3. Soupape selon la revendication 2,
**caractérisée en ce que**
les canaux (37) sont arrondis de manière concave au niveau de leur section transversale.

4. Soupape selon la revendication 1,
**caractérisée en ce que**
l'induit (19) est pourvu de rainures (20) longitudinales.

5. Soupape selon la revendication 1,
**caractérisée en ce que**
le corps de fermeture (40) a un tourillon (45) coaxial par rapport au poussoir (36) et logé dans le poussoir (36) avec un jeu radial important.
